# EUROPÄISCHE PATENTSCHRIFT

(11) **EP 1 674 200 B1**
(45) Veröffentlichungstag und Bekanntmachung des Hinweises auf die Patenterteilung: **06.02.2008**
(21) Anmeldenummer: 04030402.4
(22) Anmeldetag: 22.12.2004
(51) Int. Cl.: B23Q 17/09, B23Q 17/22

(54) **Werkzeugmaschine mit Werkzeug-Bruch-Erfassungseinrichtung**
Machine tool with tool breakage detecting device
Machine-outil avec système de détection de rupture d'outil

(43) Veröffentlichungstag der Anmeldung: 28.06.2006
(73) Patentinhaber: Cross Hüller GmbH, 71636 Ludwigsburg (DE)
(72) Erfinder: Ruckwied, Tobias, 70736 Fellbach (DE); Stengele, Gerald, 71636 Ludwigsburg (DE)
(74) Vertreter: Rau, Manfred

(56) Entgegenhaltungen:
- JP-A- 54 005 281
- PATENT ABSTRACTS OF JAPAN Bd. 1998, Nr. 10, 31. August 1998 (1998-08-31) & JP 10 138094 A (NIIGATA ENG CO LTD), 26. Mai 1998 (1998-05-26)
- PATENT ABSTRACTS OF JAPAN Bd. 2003, Nr. 12, 5. Dezember 2003 (2003-12-05) & JP 2003 311570 A (OKUMA CORP), 5. November 2003 (2003-11-05)

## Beschreibung

Die Erfindung betrifft eine Werkzeugmaschine nach dem Oberbegriff des Anspruches 1.

Eine derartige Werkzeugmaschine ist aus der JP 10-138094 A bekannt. Hierbei wird zur Erfassung eines Werkzeugbruchs ein an einer Kolbenstange eines pneumatisch beaufschlagbaren Kolben-Zylinder-Antriebs befindlicher Schalter gegen die Spitze des Werkzeugs gefahren. Bei Betätigung des Schalters wird die Länge des Werkzeugs gemessen und daraus auf den Verschleiß bzw. einen Bruch des Werkzeuges geschlossen.

Der Erfindung liegt die Aufgabe zugrunde, den Aufbau der Werkzeug-Bruch-Erfassungseinrichtung zu vereinfachen.

Diese Aufgabe wird bei einer Werkzeugmaschine der gattungsgemäßen Art durch die Merkmale im Kennzeichnungsteil des Anspruches 1 gelöst. Der Kern der Erfindung liegt darin, dass beim Verfahren des Tasters dessen Position fortlaufend erfasst wird. Wenn dieser Wert sich beim Stillstand des Tasters nach dem Anfahren an die Spitze des Werkzeugs nicht mehr ändert, erfolgt ein Vergleich des so ermittelten Ist-Werts der Werkzeuglänge mit dem in der Steuerung gespeicherten Soll-Wert, woraus dann auf das Vorhandensein oder Nichtvorhandensein eines Werkzeug-Bruchs geschlossen wird. Die Ausgestaltung nach Anspruch 2 ermöglicht es, den Taster mit hoher Geschwindigkeit gegen die Spitze des Werkzeugs zu fahren, ohne dass eine Beschädigung des Tasters oder der Spitze des Werkzeugs eintritt.

Die erfindungsgemäßen Maßnahmen ermöglichen weiterhin die vorteilhafte Ausgestaltung nach Anspruch 3, gemäß der der Taster mit konstanter Kraft gegen die Spitze des Werkzeugs angefahren wird, wobei die Erfassung der Spitze des Werkzeugs bei vollem Anpressdruck des Tasters gegen die Spitze erfolgt. Eine Umsteuerung des Antriebs zur Rückbewegung in die definierte Ausgangsposition erfolgt erst anschließend.

Eine besonders einfache Ausgestaltung des Linear-Antriebs ergibt sich aus Anspruch 4.

Die Ansprüche 5 und 6 geben weitere vorteilhafte Ausgestaltungen wieder.

Bei den Mitteln zum Transport eines Werkzeugs zwischen der Arbeitsspindel und einer Werkzeug-Aufnahme des Werkzeug-Magazins nach Anspruch 7 kann es sich um die Arbeitsspindel selber handeln, die das Werkzeug direkt im Magazin absetzt oder aber um gesonderte Mittel, die ein Werkzeug aus der Spindel entnehmen und zur Werkzeug-Aufnahme transportieren.

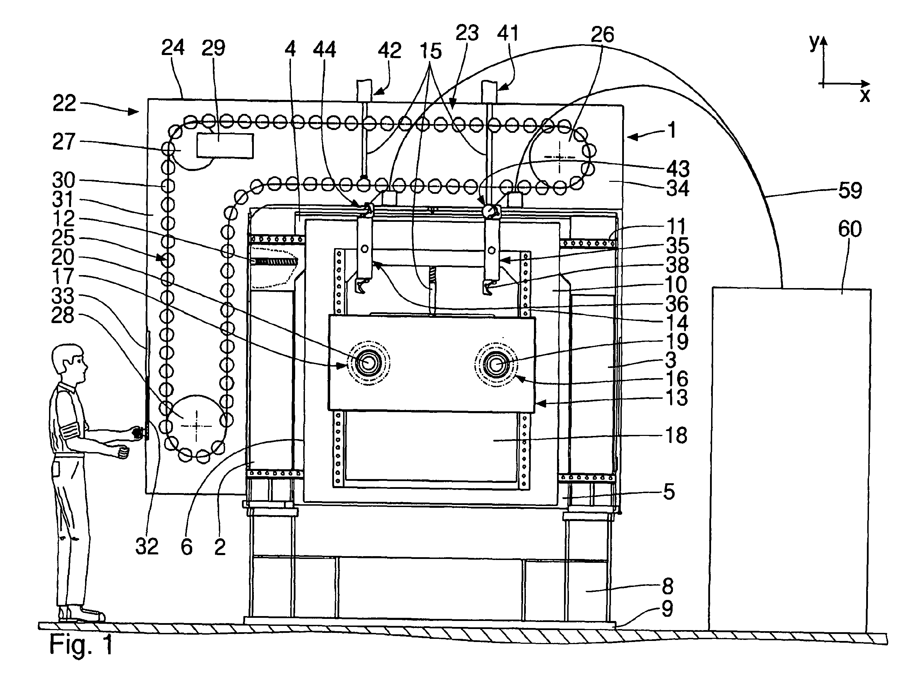

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Stirnansicht einer Werkzeugmaschine nach der Erfindung,
- Fig. 2: eine vergrößerte Teil-Darstellung der Stirnansicht nach Fig. 1 und
- Fig. 3: eine Draufsicht auf die in Fig. 2 dargestellten Einzelheiten.

Das in der Zeichnung dargestellte Ausführungsbeispiel einer Doppelspindel-Werkzeugmaschine weist einen ― in der horizontalen z-Richtung gesehen ― rechteckigen, und zwar etwa quadratischen, durch einen Rahmen gebildeten Ständer 1 auf, der sich in y-Richtung erstreckende vertikale Seiten-Stützen 2, 3 und jeweils einen diese verbindenden horizontalen, sich in x-Richtung erstreckenden oberen Quer-Holm 4 bzw. einen unteren Quer-Holm 5 gebildet ist. Die Seiten-Stützen 2, 3 und die Quer-Holme 4, 5 sind durch Hohlprofile gebildet und umschließen einen Innenraum 6, der beidseitig offen ist, und zwar insbesondere zu einem Arbeitsraum 7 hin. Der Ständer 1 ist über ein Untergestell 8 auf dem Fundament bzw. einer Fundament-Platte 9 abgestützt. An der dem Arbeitsraum 7 zugewandten Stirnseite des Ständers 1 ist ein ebenfalls rahmenartig ausgebildeter x-Schlitten 10 in x-Richtung verschiebbar angeordnet. Hierzu sind an den QuerHolmen 4, 5 jeweils eine x-Führungsschiene 11 angebracht, auf denen der x-Schlitten 10 geführt ist. Der Antrieb des x-Schlittens 10 erfolgt mittels eines auf dem x-Schlitten 10 angebrachten, in der Zeichnung nicht dargestellten Motors über eine sich in x-Richtung erstreckende, in den Seiten-Stützen 2, 3 des Ständers 1 drehfest gelagerte x-Kugelrollspindel 12.

Auf der dem Arbeitsraum 7 zugewandten Stirnseite des x-Schlittens 10 ist ein in y-Richtung, also vertikal, verschiebbarer y-Schlitten 13 verschiebbar geführt. Hierzu sind an den Seitenbereichen des rahmenartigen x-Schlittens 10 jeweils eine y-Führungsschiene 14 angebracht, auf denen der y-Schlitten 13 verschiebbar geführt ist. Der Antrieb des y-Schlittens 13 erfolgt mittels eines ebenfalls auf dem x-Schlitten 10 angebrachten, in der Zeichnung nicht dargestellten y-Motors über eine y-Kugelrollspindel 15.

Auf dem y-Schlitten 13 befinden sich im Abstand zueinander zwei Arbeitsspindeln 16, 17, die sich in z-Richtung erstrecken und nach vorn zum Arbeitsraum 7 hin und nach hinten durch den inneren Freiraum des x-Schlittens 10 in den Innenraum 6 des Ständers 1 hineinragen. Die Arbeitsspindeln 16, 17 sind jeweils um eine sich in z-Richtung erstreckende Achse 19, 20 mittels eines nicht dargestellten Antriebsmotors antreibbar. Die z-Drehachsen 19, 20 weisen einen Abstand in x-Richtung auf. An ihrer dem Arbeitsraum 7 zugewandten Seite können sie jeweils ein spanendes Werkzeug 21 aufnehmen.

Die Werkzeugmaschine ist mit einem Werkzeug-Magazin 22 und einer Werkzeug-Wechseleinrichtung 23 versehen. Das Werkzeug-Magazin 22 weist ein Magazin-Gehäuse 24 auf, das etwa winkel- bzw. L-förmig ausgebildet ist, und sich über den Arbeitsraum 7 und etwa neben der Seiten-Stütze 2 nach unten erstreckt. In dem Magazin-Gehäuse 24 ist eine endlose Kette 25 angeordnet, die ebenfalls winkel- bzw. L-förmig über Kettenräder 26, 27, 28 unter weitgehender Ausfüllung des Gehäuses 24 geführt ist. Eines der Kettenräder 27 ist über einen Ketten-Antriebsmotor 29 antreibbar. Die Kette 25 ist mit zahlreichen Werkzeug-Aufnahmen 30 versehen, in die sich waagerecht in z-Richtung erstreckende Werkzeuge 21 eingesetzt werden können.

An einem unteren Schenkel 31 des Gehäuses 24 ist eine mittels einer Abdeckung 32 bzw. einer Klappe, einer Tür oder eines Rollladens verschließbare Bestückungs-Öffnung 33 ausgebildet, durch die eine Bedienungsperson in normaler stehender Arbeitshaltung Werkzeuge 21 in die Aufnahmen 30 einsetzen bzw. aus diesen herausnehmen kann.

Im oberen Schenkel 34 des Magazin-Gehäuses 24 sind zwei zur Werkzeug-Wechseleinrichtung 23 gehörende Werkzeug-Wechsler 35, 36 angeordnet, die jeweils einen Werkzeug-Wechselarm 37 aufweisen, an dessen beiden Enden jeweils ein Greifer 38, 39 zur Aufnahme eines Werkzeugs 21 angeordnet ist. Die Wechselarme 37 sind jeweils mittels eines nicht dargestellten Wechselarm-Antriebs drehantreibbar. Diese Wechselarm-Antriebe sind so ausgestaltet, dass sie zum einen die Werkzeug-Wechselarme 37 um ihre in z-Richtung verlaufende Drehachse 40 drehen und in Richtung der Drehachse 40 verschieben können. Oberhalb der Werkzeug-Wechsler 35, 36 befinden sich zwei Übergabe-Einrichtungen 41, 42, die an jeweils einem Werkzeug-Bereitstellungsplatz 43, 44 jeweils ein Werkzeug 21 aus einer Werkzeug-Aufnahme 30 herausnehmen und nach unten verfahren können, so dass sie von einem Greifer 38 bzw. 39 eines Werkzeug-Wechslers 35 bzw. 36 erfasst werden können. Gleichermaßen legen die Greifer 38 bzw. 39 eines Werkzeug-Wechslers 35 bzw. 36 jeweils ein gebrauchtes Werkzeug 21 in der jeweiligen Übergabe-Einrichtung 41, 42 ab, die es zurück zur Werkzeug-Aufnahme 30 des Werkzeug-Magazins 22 bringt.

Soweit die Werkzeugmaschine bis hierher beschrieben ist, ist sie beispielsweise aus der WO 2004/091852 A1 bekannt, worauf bezüglich weiterer Einzelheiten verwiesen werden darf.

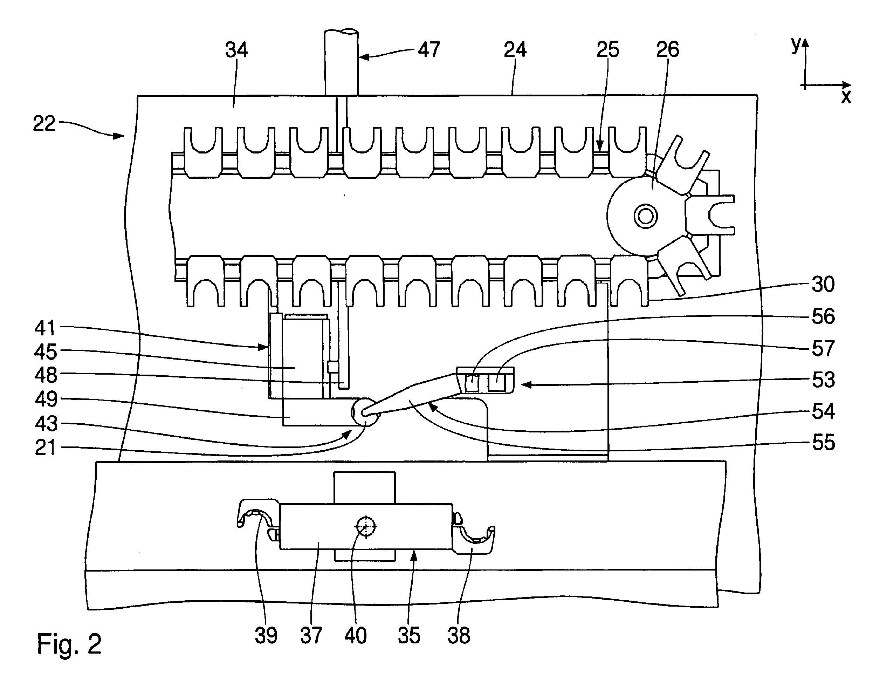

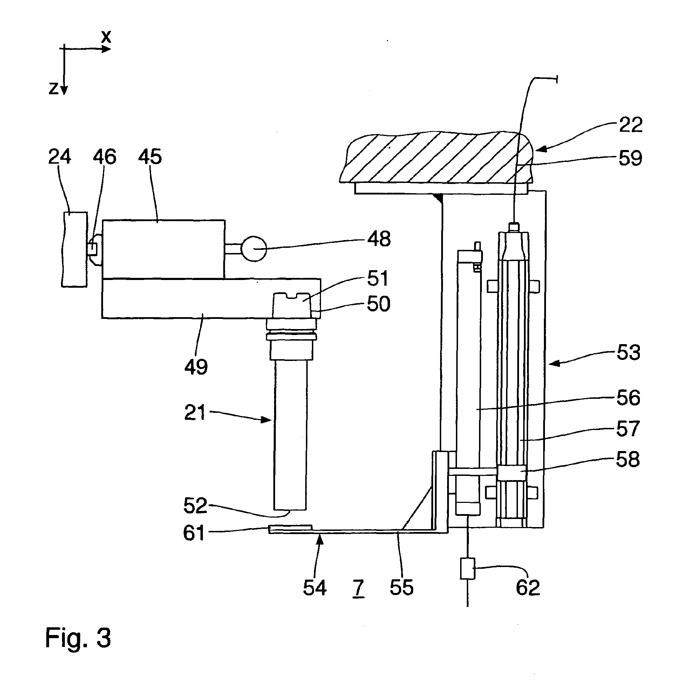

In den Fig. 2 und 3 ist nur eine Übergabe-Einrichtung 41 mit einem Werkzeug-Wechsler 35 dargestellt. Die andere Übergabe-Einrichtung 42 und der zugehörige Werkzeug-Wechsler 36 sind in gleicher Weise ausgestaltet. Die Übergabe-Einrichtung 41 weist einen Schlitten 45 auf, der in y-Richtung auf einer in dem Magazin-Gehäuse 24 angebrachten Führungsschiene 46 verschiebbar ist. Der Schlitten 45 ist mittels eines Linear-Antriebs 47 in y-Richtung zwischen zwei Endpositionen verschiebbar. Bei dem Linear-Antrieb 47 handelt es sich in der Regel um einen pneumatisch beaufschlagbaren Kolben-Zylinder-Antrieb, dessen Kolbenstange als Antriebs-Stange 48 mit dem Schlitten 45 verbunden ist. Am unteren Ende des Schlittens 45 ist ein Halte-Arm 49 angebracht, der zur Halterung eines Werkzeugs 21 auf dem Weg von dem Bereitstellungsplatz 43 zu einer Werkzeug-Aufnahme 30 und umgekehrt mit einer konischen Aufnahmeöffnung 50 ersehen ist, in die der ebenfalls konische Schaft 51 des Werkzeugs 21 eingesetzt wird, und zwar in einer in z-Richtung definierten Lage, so dass auch die Spitze 52 des Werkzeugs 21 eine in z-Richtung definierte Lage hat.

Am Werkzeug-Magazin 22 ist weiterhin benachbart zum Werkzeug-Bereitstellungsplatz 43 eine Werkzeug-Bruch-Erfassungseinrichtung 53 vorgesehen. Diese weist einen Taster 54 zum Ertasten der Lage der Spitze 52 des Werkzeugs 21 auf. Dieser Taster 54 besteht aus einer steifen Platte 55, die mittels eines Linear-Antriebs 56 in Form eines kolbenstangenlosen pneumatischen Zylinders in z-Richtung, also parallel zur Längsrichtung des Werkzeugs 21, verfahrbar ist. Parallel zum Linear-Antrieb 56 ist ein Maßstab 57 angeordnet, auf dem ein mit dem Taster 54 fest verbundener Fühler 58 verschiebbar ist. Der Maßstab 57 gibt zusammen mit dem Fühler 58 fortlaufend ein Signal ab, das die Stellung des Tasters 54 in z-Richtung repräsentiert. Diese Signale werden über jeweils eine Signal-Leitung 59 auf eine zentrale Steuerung 60 der Werkzeugmaschine abgegeben. Der Taster 54 weist an seinem äußeren Spitzenbereich einen Tast-Anschlag 61 aus einem relativ weichen Material auf, der mittels des Linear-Antriebs 56 gegen die Spitze 52 des Werkzeugs 21 gefahren wird. Diese Verfahrbewegung wird über den Linear-Antrieb 56 mit einer konstanten Kraft durchgeführt, d. h. der kolbenstangenlose Pneumatik-Zylinder 54 wird mit konstantem Druck beaufschlagt. Die Druckbeaufschlagung erfolgt über ein Magnet-Ventil 62, das von der Steuerung 60 angesteuert wird. Wenn der Tast-Anschlag 61 gegen die Spitze 52 des Werkzeugs 21 zur Anlage kommt, wird der Taster 54 zwangsweise angehalten und damit die Position des Tasters 54 und damit die Lage der Spitze 52 des Werkzeugs 21 unmittelbar erfasst, da der Fühler 58 seine Lage gegenüber dem Maßstab 57 nicht mehr ändert. In der Steuerung 60 wird dann dieses die tatsächliche Ist-Länge des Werkzeugs 21 repräsentierende Messsignal mit der in der Steuerung 60 gespeicherten Soll-Länge des Werkzeugs 21 verglichen. Bei einer einen Bruch des Werkzeugs wiederspiegelnden Differenz zwischen dem Soll-Wert und dem Ist-Wert der Länge des Werkzeugs 21 erkennt die Steuerung, dass ein Bruch des Werkzeugs 21 vorliegt. Eine solche Differenz zwischen Soll- und Ist-Wert beträgt beispielsweise 3 mm.

Der Tast-Anschlag 61 aus verhältnismäßig weichem Material ist vorgesehen, um den Taster 54 mit verhältnismäßig hoher Geschwindigkeit gegen die Spitze 52 des Werkzeugs 21 anfahren zu können, ohne den Taster 54, den Linear-Antrieb 56 oder das Werkzeug 21 beim Abtasten zu beschädigen. Die Anfahr-Geschwindigkeit des Tasters 54 gegen die Spitze 52 des Werkzeugs 21 ist ― wie sich aus dem Vorstehenden ergibt ― konstant. Ein Schalter zum Erfassen der Anlage des Tasters 54 an der Spitze 52 des Werkzeugs 21 ist nicht erforderlich; es erfolgt fortlaufend eine Abfrage der Lage des Fühlers 58 am Maßstab 57 und damit der Lage des Tasters 54. Nach jedem Tastvorgang wird der Taster 54 und damit auch der Fühler 58 in die Ausgangslage zurückgefahren, so dass nach jedem Tastvorgang erneut die Null-Position des Tasters 54 und damit eine exakte Ausgangslage für dessen Anfahr-Bewegung festgelegt wird.

## Patentansprüche

1. Werkzeugmaschine
- mit einem Arbeitsraum (7),
- mit einer Arbeitsspindel (16, 17),
-- die ein sich in einer z-Richtung erstreckendes Werkzeug (21) auswechselbar aufnimmt und
-- die in einer x-y-Ebene verfahrbar ist,
- mit einem Werkzeug-Magazin (22),
-- das verfahrbare Werkzeug-Aufnahmen (30) aufweist,
- mit einer Werkzeug-Bruch-Erfassungseinrichtung (53), die
-- einen gegen die Spitze (52) des Werkzeugs (21) anfahrbaren Taster (54)
-- einen Linear-Antrieb (56) zum Verfahren des Tasters (54) und
-- eine Weg-Mess-Einrichtung (57, 58), die jeweils während der Verschiebung des Tasters (54) aus einer definierten Ausgangsposition fortlaufend den Weg bis zur Anlage des Tasters (54) an der Spitze (52) des Werkzeugs (21) misst,
aufweist und
- mit einer Steuerung (60),
**dadurch gekennzeichnet, dass** Mittel vorhanden sind, durch die beim Stillstand des schalterlos ausgebildeten Tasters (54) nach dem Anfahren an die Spitze (52) des Werkzeugs (21) ein Vergleich eines ermittelten Ist-Werts der Länge des Werkzeugs (21) mit einem in der Steuerung (60) gespeicherten Soll-Wert der Länge des Werkzeugs (21) erfolgt, woraus auf das Vorhandensein oder Nichtvorhandensein eines Bruchs des Werkzeugs (21) geschlossen wird.

2. Werkzeugmaschine nach Anspruch 1, **dadurch gekennzeichnet,**
**dass** der Taster (54) einen Tast-Anschlag (61) aus verhältnismäßig weichem Werkstoff zur Anlage an der Spitze (52) des Werkzeugs (21) aufweist.

3. Werkzeugmaschine nach Anspruch 1 oder 2, **dadurch gekennzeichnet,**
**dass** der Linear-Antrieb (56) ein pneumatisch beaufschlagbarer Antrieb ist, der mit konstantem Druck beaufschlagbar ist.

4. Werkzeugmaschine nach einem der Ansprüche 1 bis 3, **dadurch gekennzeichnet,**
**dass** der Linear-Antrieb (56) als kolbenstangenloser Pneumatikzylinder ausgebildet ist.

5. Werkzeugmaschine nach einem der Ansprüche 1 bis 4, **dadurch gekennzeichnet,**
**dass** die Weg-Mess-Einrichtung als Maßstab (57) ausgebildet ist, dem ein mit dem Taster (54) gekoppelter Fühler (58) zugeordnet ist.

6. Werkzeugmaschine nach einem der Ansprüche 1 bis 5, **dadurch gekennzeichnet,**
**dass** die Werkzeug-Bruch-Erfassungseinrichtung (53) an einem Werkzeug-Bereitstellungsplatz (43, 44) zwischen den Werkzeug-Aufnahmen (30) des Werkzeug-Magazins und der Arbeitsspindel (16, 17) angeordnet ist.

7. Werkzeugmaschine nach einem der Ansprüche 1 bis 6, **dadurch gekennzeichnet,**
**dass** Mittel zum Transport eines Werkzeugs (21) zwischen der Arbeitsspindel (16, 17) und einer Werkzeug-Aufnahme (30) des Werkzeug-Magazins (22) vorgesehen sind.

## Claims

1. Machine tool
- with a work chamber (7),
- a work spindle (16, 17)
-- which receives in exchangeable manner a tool (21) extending in a z direction and
-- which may be moved in an x-y plane,
- with a tool magazine (22)
-- which has movable tool mounts (30),
- with a tool break detection device (53) having
-- a probe (54) which may be moved towards the tip (52) of the tool (21),
-- a linear drive (56) for moving the probe (54) and
-- a path measuring device (57, 58) which continuously measures the path up until the probe (54) contacts the tip (52) of the tool (21), in each case during the movement of the probe (54) out of a defined starting position,
- and
- with a control means (60),
**characterised in that** means are provided which compare a determined actual value of the length of the tool (21) with a desired value, stored in the control means (60), of the length of the tool (21) during a standstill of the probe (54), configured without a switch, after it has travelled to the tip (52) of the tool (21), from which comparison the presence or absence of a breakage of the tool (21) is determined.

2. Machine tool according to claim 1, **characterised in that** the probe (54) has a probe stop (61) made of relatively pliable material for contacting the tip (52) of the tool (21).

3. Machine tool according to claim 1 or 2, **characterised in that** the linear drive (56) is a pneumatically loadable drive which may be loaded with constant pressure.

4. Machine tool according to any one of claims 1 to 3, **characterised in that** the linear drive (56) is configured as a pneumatic cylinder without a piston rod.

5. Machine tool according to any one of claims 1 to 4, **characterised in that** the path measuring device is configured as a scale (57) associated with a sensor (58) coupled with the probe (54).

6. Machine tool according to any one of claims 1 to 5, **characterised in that** the tool break detection device (53) is positioned on a tool preparation site (43, 44) between the tool mounts (30) of the tool magazine and the work spindle (16, 17).

7. Machine tool according to any one of claims 1 to 6, **characterised in that** means are provided for the transportation of a tool (21) between the work spindle (16, 17) and a tool mount (30) of the tool magazine (22).

## Revendications

1. Machine-outil
- avec un espace de travail (7),
- avec un arbre moteur (16, 17),
-- qui sert de logement à un outil (21) échangeable s'étendant dans un sens z et
-- qui peut se déplacer dans un plan x-y,
- avec un magasin d'outils (22),
--qui comporte des logements à outils (30) pouvant être déplacés,
- avec un système de détection de rupture d'outil (53) qui comporte
-- un palpeur (54) pouvant être rapproché contre l'extrémité (52) de l'outil (21)
-- un entraînement linéaire (56) pour déplacer le palpeur (54) et
-- un dispositif de mesure de déplacement (57, 58) qui, pendant le déplacement du palpeur (54) à partir d'une position initiale définie, mesure respectivement de manière constante le déplacement jusqu'à ce que le palpeur (54) entre en contact avec l'extrémité (52) de l'outil (21)
et
- avec une commande (60),
**caractérisée en ce qu'**il y a des moyens avec lesquels, à l'arrêt du palpeur (54) réalisé sans commutateur, une comparaison entre une valeur effective déterminée de la longueur de l'outil (21) et une valeur de consigne de la longueur de l'outil (21) mémorisée dans la commande (60) est effectuée après que l'extrémité (52) de l'outil (21) est atteinte, ce qui permet de conclure à la présence ou à l'absence d'une rupture de l'outil (21).

2. Machine-outil selon la revendication 1, **caractérisée en ce que** le palpeur (54) comporte une butée de palpation (61) en matériau souple en comparaison pour assurer le contact avec l'extrémité (52) de l'outil (21).

3. Machine-outil selon la revendication 1 ou 2, **caractérisée en ce**
**que** l'entraînement linéaire (56) est un entraînement pouvant être alimenté par voie pneumatique qui peut être mis constamment sous pression.

4. Machine-outil selon une des revendications 1 à 3, **caractérisée en ce**
**que** l'entraînement linéaire (56) est réalisé sous forme de vérin pneumatique sans tige de piston.

5. Machine-outil selon une des revendications 1 à 4, **caractérisée en ce**
**que** le dispositif de mesure de déplacement est réalisé sous forme d'échelle (57) à laquelle un capteur (58) couplé à un palpeur (54) est affecté.

6. Machine-outil selon une des revendications 1 à 5, **caractérisée en ce**
**que** le système de détection de rupture d'outil (53) est disposé à un emplacement de mise à disposition d'outil (43, 44) entre les logements d'outils (30) du magasin d'outils et l'arbre moteur (16, 17).

7. Machine-outil selon une des revendications 1 à 6, **caractérisée en ce**
**que** des moyens de transport d'un outil (21) sont prévus entre l'arbre moteur (16, 17) et un logement d'outil (30) du magasin d'outils (22).
